# EUROPÄISCHE PATENTANMELDUNG

(11) **EP 1 394 327 A1**
(43) Veröffentlichungstag der Anmeldung: **03.03.2004**
(21) Anmeldenummer: 02292147.2
(22) Anmeldetag: 30.08.2002
(51) Int. Cl.: E03C 1/33

(54) **Einrichtung zur Befestigung eines Bauteils, wie einer Mulde, an einem Trägerteil, wie einer Trägerplatte**

(71) Anmelder: Mecano Rapid GmbH, 69123 Heidelberg (DE)
(72) Erfinder: Leon, Jean-Pierre, René, 78800 Houilles (FR); Demel, Otto, 69124 Heidelberg (DE)
(74) Vertreter: Berger, Helmut

(57) **Zusammenfassung**

Die Erfindung betrifft eine Einrichtung zur Befestigung eines Bauteiles, wie einer Mulde, an einem Trägerteil, wie einer Trägerplatte, insbesondere am Rand einer Aussparung in dieser Platte.

Die Einrichtung besitzt einen Körper (6), der Mittel zu seiner Befestigung an dem Bauteil (3) besitzt und an dem ein Klemmbügel (12) vorgesehen ist, der aus einer neutralen Stellung in eine Stellung verschwenkbar ist, in der er mit einem Ende den Trägerteil (8) untergreift und in dieser Stellung durch eine Klemmschraube (10) feststellbar ist. Die Einrichtung ist dadurch gekennzeichnet, daß der Körper (6) in ein Aufnahmeprofil am Rand des Einbauteils (2) unverlierbar vormontierbar ist.

## Beschreibung

Die Erfindung betrifft eine Einrichtung zur Befestigung eines Bauteils, wie einer Mulde, an einem Trägerteil, wie einer Trägerplatte, insbesondere am Rand einer Aussparung in dieser Platte, mit einem Körper, der Mittel zu seiner Befestigung an dem Bauteil besitzt und an dem ein Klemmbügel vorgesehen ist, der aus einer neutralen Stellung in eine Stellung verschwenkbar ist, in die er mit einem Ende den Trägerteil untergreift und in dieser Stellung durch eine Klemmschraube feststellbar ist.

Bei den Befestigungseinrichtungen dieser Art, die bekannt sind, hat sich als nachteilig erwiesen, daß sie raumaufwendig und schwer zu montieren sind, keine ausreichenden Mittel gegen einen Verlust der Befestigungsvorrichtung vorgesehen haben und der Spannbereich gering ist.

Der vorliegenden Erfindung liegt die Aufgabe zugrunde, eine Befestigungseinrichtung der vorgenannten Art zu schaffen, die die vorgenannten Mängel der bekannten Einrichtungen nicht mehr besitzt.

Zur Lösung dieser Aufgabe ist die erfindungsgemässe Befestigungseinrichtung dadurch gekennzeichnet, daß der Körper in ein Aufnahmeprofil am Rand des Einbauteils unverlierbar vormontierbar ist.

Nach einem Merkmal der Erfindung besitzt das Bauteil wenigstens im Bereich der Aufnahme des Befestigungskörpers eine vorspringende Rippe mit einem diese Rippe durchdringenden Loch und der Befestigungskörper in einen seitlichen knockenartigen Ansatz, der bei der Vormontage durch das Loch durchsteckbar ist und durch Drehung des Körpers hinter dem Loch verriegelbar ist.

Nach einem weiteren Merkmal der Erfindung werden die Mittel zur Blockierung des Befestigungskörpers in seiner Verriegelungsstellung von einem elastischen Rückstellelement gebildet, das sich am Bauteil abstützt und den Befestigungskörper in seine Verriegelungsstellung drückt.

Nach einem weiteren Merkmal der Erfindung besitzt das Bauteil an der Aufnahmestelle des Befestigungskörpers ein U-förmiges Profil, das von der vorgenannten Rippe mit dem Durchsteckloch und einer zweiten Rippe gebildet wird, und ist der Körper in dem Raum zwischen den Rippen gelagert und stützt sich mit dem federnden Rückstellelement an dem Boden des Profils ab.

Nach einem weiteren Merkmal der Erfindung besitzt der als Block ausgeführte Körper einen flächigen Bereich, auf dem sich der als zweiarmiger Hebel ausgebildete Klemmbügel mit seinem nicht unter die Trägerplatte verschwenkbaren Klemmende abstützt.

Nach einem weiteren Merkmal der Erfindung besitzt der als Block ausgeführte Befestigungskörper einen Ansatz, mit dem er sich in seine Verriegelungsstellung auf der freien Kante der mit dem Durchsteckloch versehenen Rippe unter der Wirkung des federnden Rückstellelements abstützt.

Im Folgenden wird die Erfindung in Einzelheiten beschrieben, unter Bezugnahme auf die beigefügte Abbildungen, die zwei Ausführungsbeispiele der Erfindung darstellen.

Die Figuren 1 und 2 zeigen in zwei verschiedenen perspektivischen Ansichten eine erste Ausführungsform einer Befestigungsvorrichtung einer erfindungsgemässen Befestigungseinrichtung.

Die Figuren 3 und 4 zeigen in perspektivischen Ansichten die erfindungsgemässe Befestigungsvorrichtung gemäß den Figuren 1 und 2 in der an das Aufnahmeprofil eines Bauteils angesetzten bzw. an dieser vormontierten Stellung.

Die Figuren 5 bis 7 sind perspektivische Ansichten und zeigen die erfindungsgemässe Befestigungseinrichtung in ihrer an einem Anbauteil angesetzten Stellung, in der an diesem vormontierten und in die Aussparung einer Trägerplatte eingesetzten Stellung und in der an der Arbeitsplatte festgeklemmten Stellung.

Die Figur 8 ist eine Schnittansicht der erfindungsgemässen Befestigungseinrichtung gemäß der Linie VIII-VIII der Figur 7.

Die Figur 9 ist eine Draufsicht in Richtung des Pfeils IX der Figur 8 ;

Die Figur 10 ist eine Seitenansicht in Richtung des Pfeils X der Figur 8.

Die Figuren 11 und 12 zeigen jeweils in einer perspektivischen Ansicht eine andere Ausführungsform einer erfindungsgemässen Befestigungsvorrichtung.

Die Figur 13 zeigt eine weitere Ausführungsform der Erfindung.

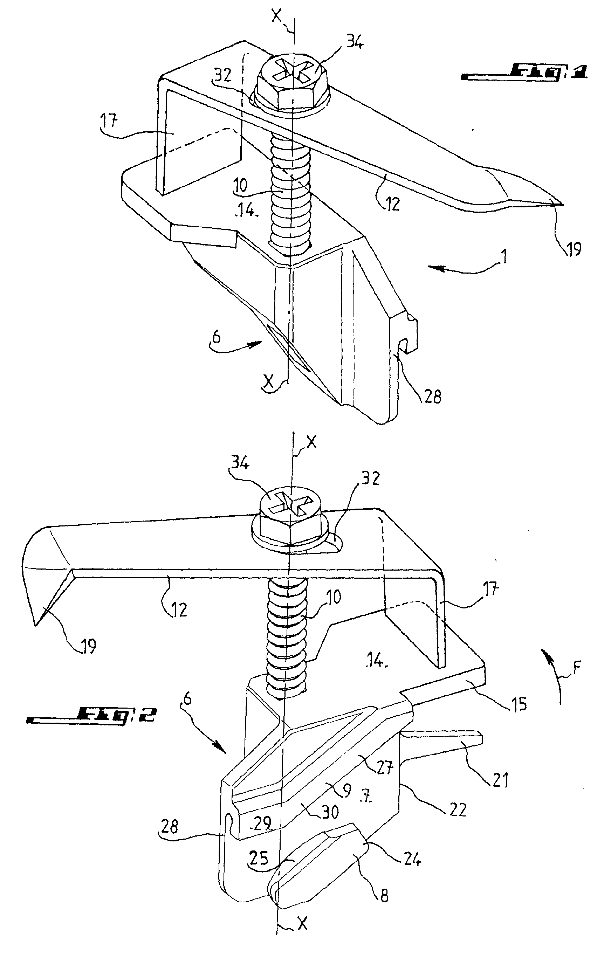

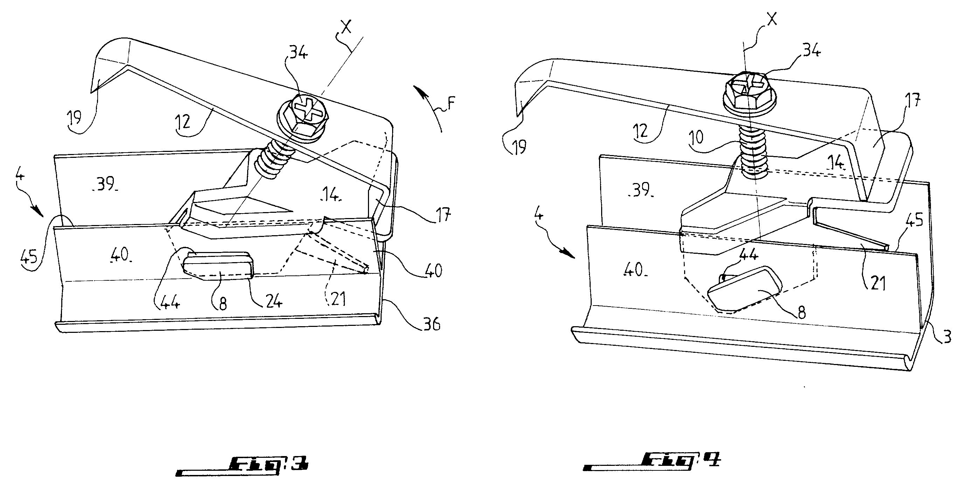

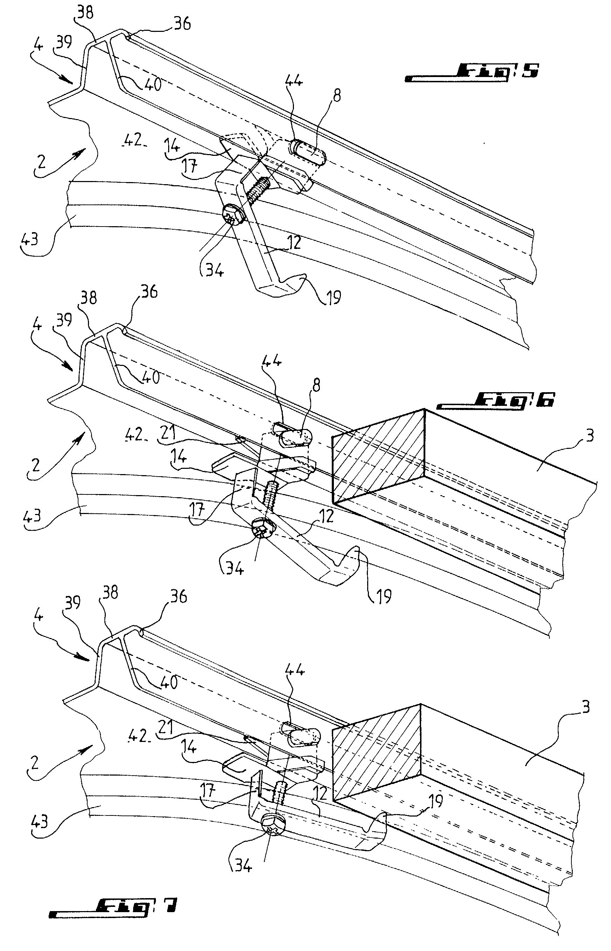

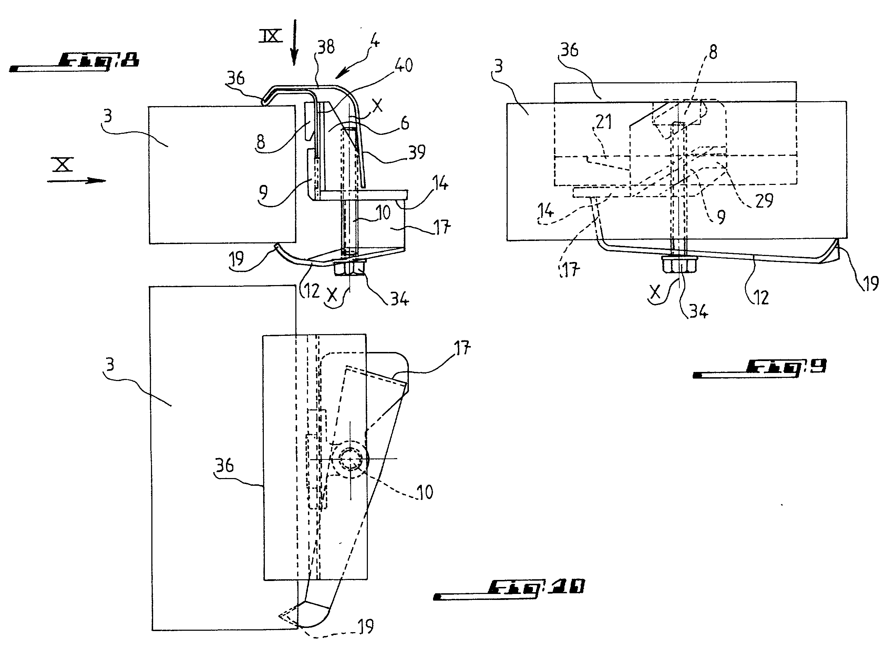

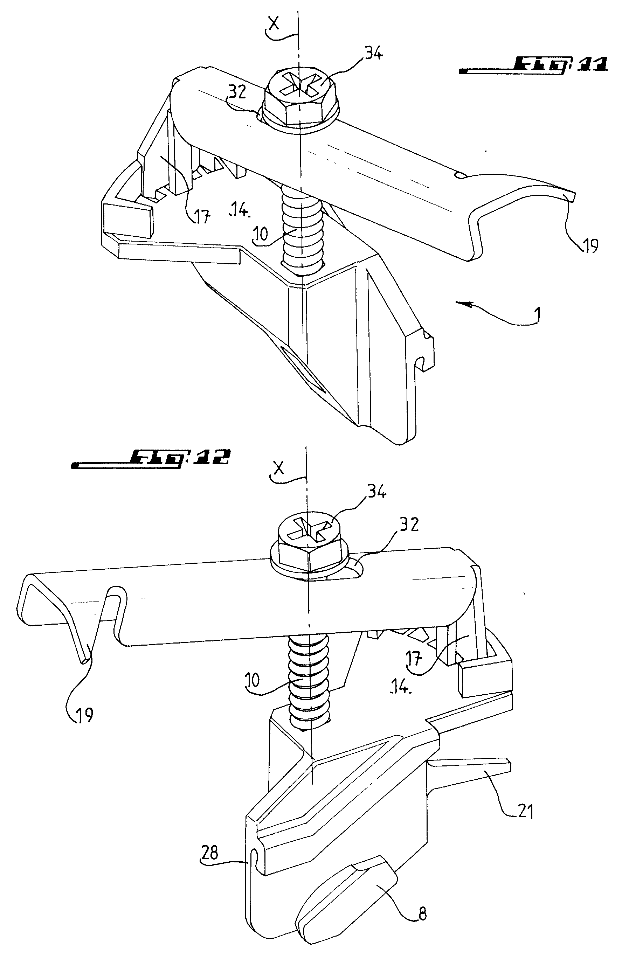

Auf den Figuren 1 und 2 ist eine erste Ausführungsform einer Vorrichtung 1 einer erfindungsgemässen Befestigungseinrichtung zum Einbau eines Einbauteils 2 in eine Trägerplatte 3, in der auf den Figuren 5 bis 7 dargestellten Weise gezeigt. Zur Befestigung des Einbauteils 2, die z.B. eine Spülmulde ist, an der Arbeitsplatte 3 wirkt die Befestigungsvorrichtung 1 mit einem Profil 4 zusammen, das am Rand des Einbauteils zumindest im Bereich der Aufnahme der Vorrichtung 1 vorgesehen ist. Die Vorrichtung 1 und das Profil 4 bilden zusammen die Befestigungseinrichtung.

Wie die Figuren 1 und 2 deutlich zeigen, besitzt die Befestigungsvorrichtung 1 einen blockförmigen Körper 6 vorzugsweise aus Kunststoff, mit an einer Seitenfläche 7 vorgesehenen Vorsprüngen 8, 9 und einer Klemm- oder Stellschraube 10 die parallel zur Längsachse des Blocks 6 verläuft, in diesen einschraubbar ist und zum Feststellen eines als zweiarmigen Hebel ausgebildeten Klemmbügels 12 dient, der um die Schraube verschwenktbar ist.

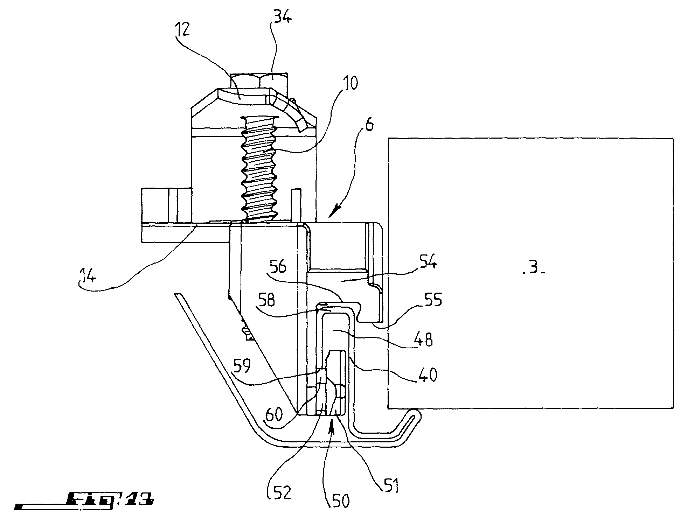

Die Schraube 10 steht senkrecht von der ebenen oberen Fläche 14 des Körpers 16 ab. Diese Fläche ist durch einen Flanschbereich 15 seitlich verlängert, um eine Abstützfläche für das abgeknickte Ende 17 des Bügels 12 zu schaffen. Das andere Ende des Bügels trägt eine schräg nach unten und seitlich ausgerichtete Kralle 19, die zum Untergreifen des Randes in der Arbeitsplatte 3, in die das Einbauteil eingesetzt ist, dient, wie dies die Figur 7 zeigt.

Der kompakte Körper 6 trägt ebenfalls eine federnde Zunge 21, die von der Seitenfläche 22 absteht, die quer zur Oberfläche 14 und zur Seitenfläche 7 verläuft. Die Zunge 21 ist schräg nach unten gerichtet und so angebracht, daß sie beim Einbau der Vorrichtung 1 in ihr Aufnahmeprofil 4 am Einbauteil 2 eine Rückstellkraft erzeugt, die in Richtung des Pfeiles F gerichtet ist. Die seitlichen Vorsprünge 8, 9 auf der parallel zur Achse X-X verlaufenden Seitenfläche 7 des Körpers 6 bilden einen nockenartigen Ansatz 8 nahe dem unteren Ende des Körpers, mit einem flachen ovalen Kopfteil 24 und einem Halsteil 25 geringeren Querschnitts, der den Kopfteil 24 am Körper 6 hält. Der seitliche Vorsprung 9 ist als abgewinkelte und geknickt verlaufende angeformte Leiste 27 ausgebildet, dessen freies Ende im wesentlichen parallel zur Seitenwand 7 verläuft. Letztere ist seitlich über die senkrechte Aussenkante des Blocks 6 durch einen flanchartigen Ansatz 28 verlängert. Die Leiste 27 besitzt einen unteren parallel zur oberen Fläche 14, auf der sich der Bügel 12 abstützt, verlaufenden Bereich 29 und einen dazu bis zur Fläche 14 verlaufenden geneigte Bereich 30. Zur Vervollkommnung der Beschreibung der Vorrichtung 1 ist noch zu bemerken, daß in dem Klemmbügel 12 ein Langloch 32 vorgesehen ist, durch das sich die Schraube 10 hindurcherstreckt, dessen Breite kleiner ist als der Durchmesser des Schraubenkopfes 34.

Das Profil 4 zur Aufnahme der Befestigungsvorrichtung 1 am Rand 24 des Bauteils 4 ist U-förmig ausgebildet mit einer Basis 38 und zwei Schenkeln 39, 40 und besitzt ferner einen seitlichen Abstützflansch 36, über den sich das Einbauteil 2 auf dem Rand der Arbeitsplatte 3 in seiner Einbaustellung abstützt (Figuren 6 und 7). Der Abstützflansch 36 ist die seitliche Verlängerung der Basis 38.

Wesentlich für die Erfindung ist, daß in dem äusseren Schenkel 40 ein ovales Loch 44 vorgesehen, dessen Längsachse parallel zum freien Rand 45 verläuft. Das Loch 44 besitzt eine Form, die der des ovalen Kopfes 24 des Ansatzes 8 am Block 6 entspricht, so daß der Kopf durch das Loch 44 hindurchgesteckt werden kann. Wichtig ist ferner, daß die Breite des U-förmigen Profils 4 etwas grösser ist als die Breite des compakten Körpers 6 der Befestigungsvorrichtung 1, so daß der Körper in den Kanal, der von dem U-förmigen Profil gebildet wird, eingesetzt werden kann, wie dies jetzt unter Bezugnahme auf die Figuren 3 und 4 beschrieben werden wird. Diese Figuren zeigen lediglich das Profil ohne den Rand des Einbauteils.

Die Figur 3 zeigt die Befestigungsvorrichtung 1 in ihrer in das U-Profil eingesetzten Stellung, wobei der Kopf 24 des Nockens 8 bereits durch das Loch 44 hindurchgesteckt ist. In dieser Stellung greift der freie Rand des Profilschenkels 40 in den Spalt 47, der von der Leiste 27 und der Seitenwand 7 des Kompaktkörpers 6 gebildet wird ein. Die Figur 3 zeigt, daß in dieser Stellung die Achse X-X des Körpers 6 gegenüber dem Profil geneigt ist. In dieser geneigten Stellung ist die Federzunge 21 verformt, da ihr freies Ende auf der Innenfläche der Basis 38 des Profils aufliegt. Zum Durchstecken des Nockens 8 durch das Loch 44 ist infolgedessen die Zunge 21 verformt worden. Wenn der Körper 6 freigegeben wird, wird der Körper in Richtung des Pfeils F von der Zunge zurückgedrückt. Dies hat zur Folge, daß der Kopf 24 des Nockens 8 sich gegenüber dem Loch 44 verdreht, sodaß der Nocken hinter dem Loch verriegelt ist. Der Körper wird solange weitergedreht, bis er die auf der Figur 4 gezeigte Stellung einnimmt, in der die Abstützfläche 14 des Klemmbügels 12 im wesentlichen waagerecht, d.h. parallel zu dem U-förmigen Profil verläuft und der freie Rand des Schenkels 40 auf dem Boden des horizontalen Bereichs 29 des von der angeformten Leiste 27 mit der Seitenfläche 7 des Körpers 6 gebildeten Spalt 47 aufliegt. In dieser Stellung legt sich die Zunge 21 auf den Rand des Schenkels 40 auf. Der Kopf 24 des Nockens 8 ist hinter dem Loch 44 blockiert und daher die Vorrichtung 1 im Randprofil 4 unverlierbar verriegelt. Infolgedessen kann die auf der Figur 4 gezeigte Stellung der Befestigungsvorrichtung 1 in dem Randprofil 4 als Vormontagezustand betrachtet werden, in der die Vorrichtung unverlierbar mit dem Einbauteil verbunden ist.

Mit der in dem Profil 4 des Einbauteils 2 vormontierten gewünschten Anzahl von Befestigungsvorrichtungen 1 wird das Einbauteil in die Aussparung der Trägerplatte 3 eingesetzt, wie dies die Figur 6 zeigt. Der Klemmbügel 12 befindet sich in seiner neutralen Stellung, in der er sich vorzugsweise parallel zum Profil erstreckt und infolgedessen das Einsetzen des Teils 2 in die Aussparung nicht behindert. Da der kompakte Körper 6 sich zum grossen Teil in Inneren des Profils befindet und praktisch nur durch den Klemmbügel 12 und die Fläche 14 aus diesem herausragt, benötigt die Befestigungsvorrichtung nur einen verhältnismässig sehr geringen zusätzlichen Platzaufwand.

Zur Befestigung des Einbauteils 2 an der Trägerplatte 3 genügt es jetzt, den Klemmbügel 12 um die Achse der Schraube 10 um einen entsprechenden Winkel zu verschwenken, bis die Kralle 19 unter dem Rand der Trägerplatte 3 in der auf der Figur 7 gezeigten Weise zu liegen kommt. In dieser Stellung ruht das abgewickelte Abstützende 17 des Bügels 12 noch auf der Abstützebene 14 des Körpers 10. Durch Anziehen der Schrauben 10 werden dann die Bügel 12 in dieser Klemmstellung festgelegt.

Die Figuren 11 und 12 zeigen eine andere Ausführungsform einer erfindungsgemässen Befestigungsvorrichtung 1. Diese Ausführungsform unterscheidet sich von der der Figuren 1 und 2 im wesentlichen nur dadurch, daß der Bereich der Abstützfläche 14 auf der der abgewinkelte Stützbereich 17 des Bügels ruht, im Schwenkbereich nebeneinanderliegende Vertiefungen 46 besitzt, durch die der Verschwenkwinkel schrittweise einstellbar ist. In jeder Stellung kann der Bügel dann durch Eingreifen des Abstützendes 17 in die entsprechende Ausnehmung 46 blockiert werden.

Ein weiterer Unterschied im Vergleich zu den Figuren 1 und 2 besteht darin, daß der Klemmbügel jetzt einen U-förmigen Querschnitt hat und infolgedessen mechanisch widerstandsfähiger ist.

Der U-förmige Querschnitt bietet den weiteren Vorteil, daß die Schraube bei Belastung einen Teil des Kippmoments übernimmt, wenn sie sich seitlich gegen die Schenkel des Bügels anlegt.

Die Figur 13 zeigt eine weitere Ausführungsform der Erfindung, bei der das Profil 4 des Einbauteils ein fensterloses Profil ist, d.h. ein Profil ohne Loch 44. In diesem Fall ist das freie Ende des Schenkels 40, der jetzt die Bezugszahl 40' trägt, zweimal rechtwinklig abgebogen, sodaß ein U-förmig profilierter Rand 48 entsteht.

Der blockförmige Körper 6 besitzt jetzt an seinem der Oberfläche 14 entgegengesetzten Ende einen seitlichen Vorsprung 50 mit einem Kopfteil 51 und einem Halsteil 52, der den Kopf am Körper hält, und oberhalb davon einen an der gleichen Seitenfläche des Körpers angeformten Ansatz 54. Die dem Kopf 51 gegenüberliegende Fläche 55 des Ansatzes 54 besitzt eine Ausnehmung 56 zur Aufnahme des Basisteils 58 des U-förmigen Randes 48 des Profilschenkels. Der knockenartige Vorsprung 50 und der Ansatz 54 sind so ausgebildet, daß beim Ansetzen des Blocks 6 an das Profil der Knocken 50 das freie Ende des U-förmigen Randes 58 hintergreift, sodaß der Kopf 50 in diesen Rand eingreifen kann. Wenn bei dem Ansetzen dann der Körper 6 verdreht wird, legt sich der Hals 52 mit einem Bereich 59 an das freie Ende des U-förmigen Randes 48 an und drückt diesen in die Ausnehmung 56, sodaß der Block an dem Profilschenkel 40' festliegt und infolgedessen unverlierbar ist. Der Anbau des Profils 4 an die Trägerplatte 3 erfolgt dann auf die im vorangehenden beschriebene Weise.

Aus der vorangehenden Beschreibung gehen unmittelbar die Vorteile der erfindungsgemässen Befestigungseinrichtung hervor. Unter diesen Vorteilen sind hervorzuheben die Vormontage der Einbauvorrichtungen 1 auf dem Randprofil 4 des Einbauteils, wodurch ein unbeabsichtigtes Verlieren ausgeschlossen wird, die einfache und leichte Montage, der sehr geringe Einbauraum zwischen dem Einbauteil und der Arbeitsplatte und der hingegen verhältnismässig große Spannbereich.

Diese Vorteile werden möglich gemacht, durch die im vorangehend beschriebenen Funktionen, wie das schräge Aufsetzen der Befestigungsvorrichtung in das Aufnahmeprofil, das Einstecken in das Aufnahmeloch, die Verdrehung mit gleichzeitigem Verriegeln des Teils in dem Profil, das Einsetzen in die Aussparung der Arbeitsplatte, das Schwenken der Kralle unter die Arbeitsplatte und das Anschrauben des Befestigungselements.

## Patentansprüche

1. Einrichtung zur Befestigung eines Bauteiles, wie einer Mulde, an einem Trägerteil, wie einer Trägerplatte, insbesondere am Rand einer Aussparung in dieser Platte, mit einem Körper, der Mittel zu seiner Befestigung an dem Bauteil besitzt und an dem ein Klemmbügel vorgesehen ist, der aus einer neutralen Stellung in eine Stellung verschwenkbar ist, in der er mit einem Ende den Trägerteil untergreift und in dieser Stellung durch eine Klemmschraube feststellbar ist, **dadurch gekennzeichnet, daß** der Körper (6) in ein Aufnahmeprofil (4) am Rand des Einbauteils (2) unverlierbar vormontierbar ist.

2. Einrichtung nach Anspruch 1, **dadurch gekennzeichnet, daß** das Aufnahmeprofil (4) nahe dem Rand (36), mit dem der Bauteil (2) auf dem Trägerteil (3) aufliegt, eine vorspringende Rippe (40) besitzt, an der der Körper (6) unverlierbar vormontierbar ist.

3. Einrichtung nach Anspruch 2, **dadurch gekennzeichnet, daß** am Körper (6) an einer Seitenfläche (7) ein nockenartiger Ansatz (8) angebracht ist, der durch ein Loch (44) in der Profilrippe (40) hindurch steckbar und durch Drehung des Körpers gegenüber dem Loch (44) hinter diesem verriegelbar ist und daß Mittel (21) vorgesehen sind, um den Körper in diese verriegelten Stellung zu halten.

4. Einrichtung nach Anspruch 3, **dadurch gekennzeichnet, daß** die Mittel zum Halten des Befestigungskörpers in seiner Verriegelungsstellung von einem beim Durchstecken des Ansatznockens (8) durch das Loch (44) elastisch verformbares Rückstellelement (21) gebildet werden, der Körper (6) angebracht ist und sich am Bauteil abstützt.

5. Einrichtung nach Anspruch 4, **dadurch gekennzeichnet, daß** das Rückstellelement als vom Körper (6) abstehende elastisch verformbare Zunge (21) ausgebildet ist.

6. Einrichtung nach einem der Ansprüche 3 bis 5, **dadurch gekennzeichnet, daß** das Aufnahmeprofil (4) als U-förmiges Profil ausgebildet ist, dessen einer Schenkel vor der vorgenannten Rippe (40) mit dem Durchsteckloch (44) gebildet wird, und daß der Körper (6) in den zwischen den Schenkeln des U-gebildeten Raums gelagert ist und sich mit den federnden Rückstellelement (21) auf dem Boden des Profils abstützt.

7. Einrichtung nach Anspruch 6, **dadurch gekennzeichnet, daß** die Abstützzone eine die obere Fläche des Körpers (6) seitlich überragende Fläche eines angefügten Teils ist.

8. Einrichtung nach einem der Ansprüche 3 bis 7, **dadurch gekennzeichnet, daß** der Befestigungskörper einen als Leiste (9) gebildeten seitlichen Ansatz oberhalb des durchsteckbaren Nockens (8) besitzt, mit dem er sich in seine Verriegelungsstellung auf der freien Kante (45) der mit dem Durchsteckloch (44) versehenen Rippe (40) unter Wirkung des federnden Rückstellelements (21) abstützt.

9. Einrichtung nach einem der Ansprüche 1 oder 2, **dadurch gekennzeichnet, daß** der freie Rand der vorspringenden Rippe 40' U-förmig ausgebildet ist und der Körper 6 seitliche Vorsprünge 50, 54 besitzt, zwischen die der U-förmige Rand 48 einsetzbar ist und an dem der Block durch Drehung verriegelbar ist.

10. Einrichtung nach einem der Ansprüche 2 bis 9, **dadurch gekennzeichnet, daß** der Körper (6) der Befestigungsvorrichtung (1) einen flächigen Bereich (14) besitzt, auf dem sich der als zweiarmiges Hebel ausgebildete Klemmbügel (12) mit einem Ende (1) abstützt, wobei das andere Ende (19) als das Trägerteil untergreifende Kralle ausgebildet ist.

11. Einrichtung nach Anspruch 10, **dadurch gekennzeichnet, daß** das Abstützende (17) des Klemmbügels (12) als abgeknicktes Ende ausgebildet ist und daß die Abstützfläche (14) des Bügels etwas oberhalb der Abstützleiste (9, 29) vorgesehen ist.

12. Einrichtung nach einem der Ansprüche 10 oder 11, **dadurch gekennzeichnet, daß** die Kralle (19) als seitlich schräg vom Bügel (12) abstehendes Ende ausgebildet ist.

13. Einrichtung nach einem der Ansprüche 10 bis 12, **dadurch gekennzeichnet, daß** in der Abstützfläche (14) Arretiervertiefungen (46) vorgesehen sind, in die das Abstützende (17) des Klemmbügels (12) zu seiner Feststellung in verschiedenen Winkelstellungen eingreifen.
